# EUROPEAN PATENT SPECIFICATION

(11) **EP 3 863 963 B1**
(45) Date of publication and mention of the grant of the patent: **27.09.2023**
(21) Application number: 18789042.1
(22) Date of filing: 12.10.2018
(51) Int. Cl.: C01B 3/32, C07C 29/76, D21C 11/00

(54) **PROCESS FOR THE PRODUCTION OF HYDROGEN**
VERFAHREN ZUR HERSTELLUNG VON WASSERSTOFF
PROCÉDÉ DE PRODUCTION D'HYDROGÈNE

(43) Date of publication of application: 18.08.2021
(73) Proprietor: UPM-Kymmene Corporation, 00100 Helsinki (FI)
(72) Inventor: JOKELA, Pekka, 02660 Espoo (FI); GUTIERREZ, Andrea, 02160 Espoo (FI)
(74) Representative: Hoffmann Eitle
(86) International application number: PCT/EP2018/077877
(87) International publication number: WO 2020/074095

(56) References cited:
- EP-A2- 2 119 668
- EP-B1- 2 670 908
- WO-A1-02/40768
- WO-A1-2011/026243
- WO-A1-2014/201555
- WO-A2-2009/059920
- US-A1- 2013 071 317

## Description

### TECHNICAL FIELD

The present invention relates to the production of hydrogen. More particularly, the invention concerns the production of renewable hydrogen from a biological feedstock which is a by-product of wood pulp manufacture. The process can produce hydrogen of 100% biological origin, and the hydrogen can be used as a renewable fuel or a renewable component in the manufacture of a fuel.

### BACKGROUND OF THE INVENTION

There is great interest in the reduction of greenhouse gas emissions. Biofuels, which are renewable fuels derived from biological matter, are gaining popularity as a more environmentally friendly alternative to conventional fossil fuels. In Europe, the Renewable Energy Directive requires biofuels to achieve greenhouse gas savings of at least 50% relative to fossil fuels in order to be considered sustainable. This savings requirement increased to 60% in 2018 for new production plants, and there are proposals for a further increase to 70%

Hydrocarbon biofuels can be produced by hydrotreatment of oxygenated biological compounds such as triglycerides, fatty acids and fatty acid esters. Such processes are renewable in the sense of utilising a biological feedstock. However, the hydrogen required for deoxygenation of biological compounds is conventionally produced from natural gas (methane). This has the drawback of being incompatible with the general aim of reducing the reliance on fossil fuels.

It is also known to produce hydrogen by gasification of biological matter. Gasification produces a mixture of hydrogen and carbon monoxide (syngas). Syngas can be converted to hydrocarbons by the Fischer-Tropsch process. However, gasification tends to produce syngas having a hydrogen to carbon monoxide molar ratio lower than that required for optimal performance of the Fischer-Tropsch process. Therefore, it is often necessary to add make-up hydrogen to the syngas. Make-up hydrogen may be obtained from natural gas or by conversion of a portion of the carbon monoxide in the syngas using the water-gas shift reaction. The former process is undesirable from an environmental point of view, as discussed above, whilst the latter process is undesirable since the consumption of carbon monoxide reduces the hydrocarbon yield.

WO 2009/059920 A2 discloses the reforming of biomethanol derived from black liquor.

As well as having utility in the conversion of oxygenated biological compounds to hydrocarbons and the production of hydrocarbons by the Fischer-Tropsch process, hydrogen is useful as a renewable fuel per se, such as in fuel cells, as well as in the upgrading of hydrocarbons, such as cracking, sulfur removal and isomerisation reactions. However, there remains the problem of producing hydrogen in a manner which is both efficient and environmentally friendly.

In order to satisfy the increasingly stringent requirements regarding lifecycle greenhouse gas emissions, hydrogen production processes are sought which do not rely on fossil fuels and are technically and commercially feasible. It is an object of the present invention to provide such a process.

### SUMMARY OF THE INVENTION

The present invention provides a process for the production of hydrogen, comprising the following steps:
(i) recovering methanol from black liquor, and
(ii) subjecting the methanol to non-catalytic reforming to produce hydrogen,
wherein the non-catalytic reforming is performed at a temperature in the range of 700-1300°C.

This process is renewable since it utilises a by-product of the kraft wood pulping process. This by-product is black liquor, which is an aqueous liquid containing wood residues and spent pulping chemicals. The kraft process typically produces about 1.5 tonnes of black liquor dry solids per air dry tonne of wood pulp (cellulose fibres). In the past, the organic components of black liquor were utilised merely by burning them for the production of steam used in the generation of electricity. Alternatively, it is known to use black liquor as a feedstock for the production of syngas by gasification.

In addition to wood residues and pulping chemicals, black liquor contains methanol ("kraft methanol") which is principally produced by alkali-catalysed elimination from hemicellulose. The yield of methanol is typically in the range of 8-12 kg per air dry tonne of pulp. Methanol poses an environmental concern, such that it is typically removed from black liquor and incinerated.

Further, black liquor contains sulfur compounds, such as hydrogen sulfide, dimethyl sulfide, dimethyl disulfide and thiol compounds, generated by side reactions between sodium sulfide and wood components. Sulfur compounds contaminate methanol recovered from black liquor. They are known catalyst poisons and are typically incinerated together with the methanol.

The present inventors have found that methanol recovered from black liquor can be effectively converted into hydrogen by non-catalytic reforming, even in the presence of sulfur compounds, provided that the reaction temperature is within a certain range, namely 700-1300°C. This means that it is not necessary to purify the methanol to a high degree prior to its conversion.

Thus, the invention provides an efficient and environmentally friendly process for the production of hydrogen from the methanol component of black liquor, without the necessity for arduous purification of the methanol. The hydrogen can be used as a renewable fuel itself, or as a renewable component in the production of a hydrocarbon biofuel, e.g. hydrotreatment of a vegetable oil.

### BRIEF DESCRIPTION OF THE DRAWINGS

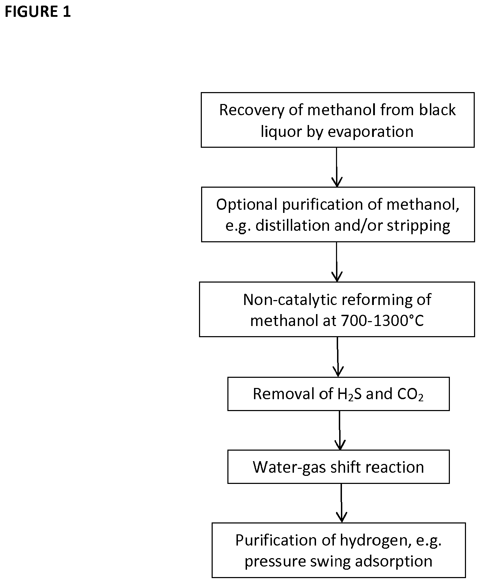

Figure 1: Flow diagram representing a process according to the present invention.

### DETAILED DESCRIPTION

The process of the invention will now be described in detail, with reference to the drawings. The discussion of non-essential features, whether using the term "preferable", "embodiment" or otherwise, should not be understood to represent a specific teaching or example which cannot be combined with other non-essential features described in similar terms. Such features may be combined together, within the limits of technical compatibility as recognised by the skilled person.

The process of the invention utilises the methanol component of black liquor. The term "black liquor", as used herein, refers to the aqueous liquid by-product of the kraft pulping process which has been separated from solid wood pulp (cellulose fibres). The production of black liquor would be well-understood by the skilled person. Black liquor contains dissolved wood degradation products such as lignin fragments, as well as methanol, sulfur compounds and spent inorganic chemicals used in the pulping process. The liquid separated from pulp and containing these compounds is commonly referred to as "crude black liquor" or "weak black liquor". In the context of the present invention, the black liquor is not required to be crude in the sense of having not undergone any kind of treatment; it is possible for certain compounds to be removed from the black liquor prior to the recovery of methanol. For instance, soap compounds (e.g. fatty acid salts) may be removed from black liquor (e.g. by skimming) prior to the methanol recovery. The skilled person would recognise the boundaries of the term "black liquor".

In an embodiment, the black liquor from which methanol is recovered in step (i) of the process has a dry solids content of 10-30 wt.% or 10-20 wt.%. This includes both dissolved organic solids such as lignin and hemicellulose fragments, and dissolved inorganic solids such as spent pulping chemicals. The black liquor also contains methanol, and the methanol content is typically in the range of 0.5-1.5 wt.% based on the mass of dry solids. Sulfur compounds are typically contained in the black liquor in an amount of 2-7 wt.% based on the mass of dry solids.

The kraft pulping process is well-known. This process involves the conversion of wood to pulp using an aqueous mixture containing sodium hydroxide and sodium sulfide. These chemicals remove the lignin links between cellulose fibres, thereby releasing the fibres and producing water-soluble compounds.

The process of the present invention involves the initial step of recovering methanol from black liquor (step (i)). This means that methanol contained in black liquor is removed by some means. This may be achieved by evaporation, whereby methanol vapour is drawn off, typically together with water and other compounds such as turpentine and sulfur compounds. Multi-effect evaporation may be employed, in which evaporation takes place in two or more stages (effects) by means of a plurality of heat exchangers connected in series. Vapour generated in the first evaporation stage is used as the heating medium in the second evaporation stage, and so on. Methanol can be recovered as a condensate from one or more of the evaporation stages. Due to its relatively low boiling point, the condensate from the first evaporator may have the highest methanol concentration and therefore be the primary source of recovered methanol.

It is not essential to purify the methanol to a high degree. However, methanol removed from black liquor may be in admixture with other components, i.e. the recovery step provides a composition containing methanol and other components. It may be desirable to increase the purity of the methanol prior to further treatment, i.e. increase the methanol content of the composition. In particular, methanol may be separated from water by distillation, so as to achieve an increased methanol content of, for instance, at least 70 wt.%.

It may be desirable to remove certain components besides water prior to the non-catalytic reforming step. This may be achieved by one or both of distillation and stripping, e.g. stripping followed by distillation. In an embodiment, evaporation is followed by distillation and/or stripping in order to remove impurities such as turpentine and a certain amount of sulfur compounds, though not necessarily all sulfur compounds. Impurities can be stripped from the methanol and removed as overhead gas. Turpentine components (e.g. α-pinene) can cause coke and/or tar formation during the reforming step, so it is desirable to remove turpentine beforehand. The turpentine content is preferably less than 10 wt.%, more preferably less than 7 wt.% in the methanol composition subjected to non-catalytic reforming.

The distillation/stripping step may be followed by a further purification step such as an adsorption step, which may involve a single adsorption unit or multiple adsorption units arranged in series. Activated carbon is one example of the adsorption material. The methanol can be passed through one or more columns packed with an adsorption material, whereby impurities are captured. Relatively high molecular weight impurities may be removed in this way.

In an embodiment, methanol is recovered from black liquor by evaporation, and the methanol purity is increased by stripping, followed by adsorption using one or more adsorption units packed with an adsorbent such as activated carbon.

The recovered and optionally purified composition preferably contains at least 75 wt.% methanol, more preferably at least 85 wt.% methanol. As already mentioned, it is not essential for the methanol to undergo extensive purification. The methanol subjected to non-catalytic reforming may be mixed with a quantity of sulfur compounds that would be considered considerable in the context of known processes.

The recovered and optionally purified methanol may have a sulfur content of 1 ppm (weight-by-weight) or more, 50 ppm or more, 100 ppm or more, or even 200 ppm or more, calculated as elemental sulfur. In an embodiment, the sulfur content is in the range of 1-2000 ppm. In another embodiment, the sulfur content is in the range of 50-2000 ppm. In a further embodiment, the sulfur content is in the range of 100-2000 ppm. In a still further embodiment, the sulfur content is in the range of 200-2000 ppm. The sulfur content may be determined by UV fluorescence in accordance with EN ISO 20846:2011.

The methanol and sulfur contents discussed above are those of the feed of the non-catalytic reforming step (ii).

In step (ii), the recovered and optionally purified methanol is subjected to non-catalytic reforming in order to produce hydrogen. Reforming methanol to produce hydrogen is known in the art. In the present invention, essential features of the reforming step are that it is performed in the absence of a catalyst and at a temperature in the range of 700-1300°C. This combination of process features provides a good yield of hydrogen from the methanol recovered from black liquor. There is insignificant or negligible production of coke and tar, even if the methanol is contaminated with sulfur compounds.

In the context of the present invention, "non-catalytic reforming" refers to the production of hydrogen from methanol without the use of a catalyst. In particular, the methanol recovered from black liquor is reformed without the use of a metal catalyst, such as a transition metal catalyst, whether supported or unsupported. The absence of a catalyst eliminates the risk of catalyst deactivation by pre-existing impurities such as sulfur compounds, thereby reducing the importance of purifying the methanol prior to the reforming step. There is also no risk of catalyst deactivation by coke and other impurities that might be generated during the reforming step.

Non-catalytic reforming is performed at a temperature in the range of 700-1300°C, meaning that the maximum temperature of the reactant composition inside the reforming reactor (reformer) is within this range, and the reaction of methanol to produce hydrogen occurs within this range. The temperature may vary within the reformer, i.e. between the reactant inlet and the product outlet. The methanol is typically heated prior to entering the reformer (e.g. to 100-600°C), and the temperature is typically at a maximum close to the product outlet.

The use of a maximum reforming temperature of 700-1300°C is beneficial in terms of the hydrogen yield and avoidance of undesirable by-products. As well as avoiding significant coke production, the production of a significant amount of methane is avoided at this reforming temperature.

The non-catalytic reforming is preferably performed at a temperature in the range of 800-1100°C, more preferably 850-1100°C, still more preferably 850-1000°C, and most preferably 850-950°C, in order to maximise the hydrogen yield. Higher temperatures do not benefit hydrogen production; the amounts of carbon monoxide and water tend to be increased at the expense of hydrogen and carbon dioxide.

A reforming temperature higher than 800°C can be beneficial when the methanol is contaminated with a significant amount of sulfur compounds, so as to prevent the formation of coke and maximise the production of hydrogen. When the sulfur content is 50 ppm or more, the reforming temperature is preferably at least 850°C. In an embodiment, the sulfur content is in the range of 50-2000 ppm and the reforming temperature is in the range of 850-1100°C. In another embodiment, the sulfur content is in the range of 100-2000 ppm and the reforming temperature is in the range of 850-1100°C.

The pressure in the reformer is suitably in the range of 1-25 bar, preferably 5-25, more preferably 10-25 bar, and most preferably 15-25 bar. It was found that elevated pressures can have a negative effect on hydrogen yield at low temperatures, and this is avoided at the temperatures employed in the process of the invention. The use of an elevated pressure in the reformer avoids the need to pressurise the hydrogen in a separate step in order for it to be stored.

In the case that the pressure is in the range of 10-25 bar, it is preferable that the reaction temperature is in the range of 850-1100°C in order to maximise the hydrogen yield and minimise the production of coke.

The reforming step can be performed using steam. Steam reforming is an endothermic reaction and therefore requires a heat source. In a favoured embodiment, the recovered methanol is subjected to autothermal reforming, which is performed using oxygen as well as steam, so that the heat required for the endothermic reforming reactions is provided by oxidation reactions. In this case, part of the methanol is used as fuel to provide the desired reaction temperature.

It has been found that the yield of hydrogen is benefitted when the ratio of the molar amount of steam to the molar amount of methanol is greater than 1. Preferably the steam to methanol molar ratio is in the range of 1.5-5, more preferably 1.5-2.5.

It is preferred that the recovered and optionally purified methanol is reformed in the presence of molecular oxygen, in order to suppress coke production and/or generate heat for the reforming reaction. In an embodiment, oxygen is employed such that the oxygen to methanol molar ratio is in the range of 0.25-0.75. Limitation of the maximum oxygen content is beneficial in terms of preventing a negative effect on the hydrogen yield.

In an embodiment, no pre-reforming step is performed prior to the non-catalytic reforming step (ii). This means that there is no pre-treatment of the recovered methanol (e.g. catalytic pre-reforming at a lower temperature) in order to convert certain compounds prior to the non-catalytic reforming step. The methanol can be fed directly to the reformer, irrespective of its sulfur content.

The product of the non-catalytic reforming step comprises hydrogen, carbon dioxide, carbon monoxide, and typically other gases such as hydrogen sulfide. It is preferable to treat the gas mixture in order to separate hydrogen from other compounds, particularly carbon dioxide and hydrogen sulfide. This may be achieved by an amine or methanol/water wash, or may be achieved using an adsorption medium.

The hydrogen yield can be improved by conversion of carbon monoxide produced in the reforming step. In this case, optionally pre-purified product of the reforming step is fed to a water-gas shift reactor together with steam, so as to produce further hydrogen and carbon dioxide. The shift reaction is favoured at lower temperatures than those used in the reforming step. A preferred temperature range for the shift reaction is 200-450°C. This reaction can be promoted by a catalyst, a particular example of which is an FeCr-based catalyst. This catalyst is effective towards the upper end of the aforementioned temperature range (e.g. 350-450°C), such that less cooling of the gas is required after the reformer. It is preferable to remove impurities such as hydrogen sulfide beforehand; however, this is not necessary if the catalyst is able to tolerate impurities.

Hydrogen produced in a water-gas shift reaction can be purified by suitable means. For instance, the hydrogen can be separated from carbon dioxide in a pressure swing adsorption unit.

An example of a beneficial process according to the present invention is set out in Figure 1. In this process, methanol is recovered from black liquor by evaporation. The recovered methanol is optionally purified, such as by distillation and/or stripping. The methanol is subsequently reformed at a temperature in the range of 700-1300°C in the absence of a catalyst, so as to produce hydrogen. The produced hydrogen is separated from impurities such as hydrogen sulfide and carbon dioxide. Following this, a water-gas shift step is performed in order to produce further hydrogen, along with carbon dioxide. These products are separated (e.g. by pressure swing adsorption) in order to provide hydrogen having a sufficient purity level.

The renewable hydrogen produced by the process of the present invention can be used for a variety of purposes. For instance, the hydrogen can be used as a renewable fuel per se, such as in a fuel cell. Alternatively, the hydrogen can be used as a renewable component in the manufacture of hydrocarbons, particularly hydrocarbons intended for use as fuel components. Examples of this application include hydrodeoxygenation of triglycerides or fatty acids to produce hydrocarbons, e.g. diesel range hydrocarbons. The renewable hydrogen of the invention may also be used as make-up hydrogen in the manufacture of hydrocarbons from syngas by the Fischer-Tropsch process. Furthermore, the hydrogen may find utility in the upgrading of hydrocarbons, including cracking, isomerisation and sulfur removal.

The process of the invention may advantageously be integrated with biofuel production, such that the hydrogen produced from recovered kraft methanol is utilised in the production of hydrocarbons from other biological material, particularly biological material associated with pulp production. Such biological material may be wood which is not utilised in pulp production, or may be other components of black liquor or derivatives of such components. By way of illustration, black liquor can serve as a source of methanol for the production of hydrogen according to the present invention, and tall oil containing fatty acids can be produced by acidulation of black liquor. Such fatty acids can be converted to hydrocarbons by catalytic deoxygenation in the presence of hydrogen produced from the methanol component of black liquor.

### EXAMPLES

### Example 1

Black liquor was obtained from a kraft pulping process performed using softwood. The black liquor contained 88.1 wt.% organic components (46.1 wt.% lignin and 36.6 wt.% aliphatic acids) and 11.9 wt.% inorganic components (4.9 wt.% NaOH, 4.7 wt.% Na₂S, 2.0 wt.% Na₂CO₃, 0.3 wt.% others), as a percentage of the dry solids. The total sulfur content of the black liquor was 2.6 wt.%.

Methanol was recovered from the black liquor using a capillary evaporator equipped with a 200 W heater, and the methanol was purified by stripping followed by adsorption. The stripping step was performed at 65°C and atmospheric pressure in order to remove some light sulfur compounds. The adsorption step was performed by passing the stripped methanol through activated carbon at 25°C and atmospheric pressure.

The purified composition contained 76.5 wt.% methanol, 17.1 wt.% water, 6.4 wt.% α-pinene and 126 ppm sulfur (calculated as elemental sulfur). The methanol content was determined by GC (Agilent 7890B), the water content was determined by titration (907 Titrando, manufactured by Metrohm), the α-pinene content was determined by GC-MS (GC: Agilent 6890N; MS: Agilent 5973 Network), and the sulfur content was determined by UV fluorescence in accordance with EN ISO 20846:2011.

The purified composition was pre-heated to 300°C by passing it through a heated steel vessel lined with quartz and having an inert packing of silicon carbide. The composition was subsequently subjected to non-catalytic reforming by passing it through a quartz-lined steel reactor packed with silicon carbide. The pre-heated composition was introduced into the reactor at a flow rate of 0.7 g/min. Steam and oxygen were also introduced separately into the reactor, such that they mixed with the methanol composition towards the top of the reactor. Steam and oxygen were introduced at flow rates of 1 g/min and 0.2 g/min, respectively, such that the steam to methanol molar ratio inside the reactor was 2 and the oxygen to methanol molar ratio was 0.5. The maximum temperature inside the reactor was 900°C, and the pressure was maintained between 2 and 3 bar.

The gaseous product exiting the reactor was cooled and analysed by GC (Agilent HP 6890) and a thermal conductivity detector every 15 minutes after the water was condensed and sulfur compounds removed, to determine the quantities of hydrogen and other gaseous components. The averages of the values obtained over a two-hour period are reported in Table 1 below.

### Reference Example

The process of Example 1 was repeated, except that the feed to the reformer was laboratory grade methanol containing no sulfur, i.e. black liquor was not used as the source of methanol. The results are reported in Table 1.

**Table 1: Average gaseous product composition after condensing water**

| | Example 1 | Reference Example |
|---|---|---|
| H₂ (vol.%) | 61 | 60 |
| CO₂ (vol.%) | 6 | 7 |
| CO (vol.%) | 31 | 29 |
| CH₄ (vol.%) | 1 | 1 |

In both Example 1 and the Reference Example, only trace amounts of coke and tar were produced.

These results demonstrate that the process of the invention is effective in the production of hydrogen from methanol recovered from black liquor, even when the methanol is contaminated with a significant amount of sulfur. The volume percentage of hydrogen produced from methanol recovered from black liquor is comparable to that obtained from pure methanol. Thus, extensive purification of the methanol is not necessary following its recovery from black liquor.

## Claims

1. A process for the production of hydrogen, comprising the following steps:
(i) recovering methanol from black liquor, and
(ii) subjecting the methanol to non-catalytic reforming to produce hydrogen,
wherein the non-catalytic reforming is performed at a temperature in the range of 700-1300°C.

2. A process according to Claim 1, wherein the step of recovering methanol from black liquor comprises evaporation, and the recovered methanol is purified by one or both of stripping and distillation.

3. A process according to Claim 1 or Claim 2, wherein the methanol subjected to non-catalytic reforming has a sulfur content in the range of 1-2000 wppm, calculated as elemental sulfur.

4. A process according to Claim 3, wherein the methanol subjected to non-catalytic reforming has a sulfur content in the range of 50-2000 wppm, calculated as elemental sulfur.

5. A process according to any preceding claim, wherein the non-catalytic reforming is performed at a temperature in the range of 800-1100°C.

6. A process according to Claim 5, wherein the non-catalytic reforming is performed at a temperature in the range of 850-1100°C.

7. A process according to any preceding claim, wherein the non-catalytic reforming is performed using steam, and the steam to methanol molar ratio is greater than 1.

8. A process according to Claim 7, wherein the steam to methanol molar ratio is in the range of 1.5-5.

9. A process according to any preceding claim, wherein the non-catalytic reforming is performed using molecular oxygen, and the oxygen to methanol molar ratio is in the range of 0.25-0.75.

## Patentansprüche

1. Verfahren zur Herstellung von Wasserstoff, umfassend die folgenden Schritte:
(i) Rückgewinnung von Methanol aus Schwarzlauge, und
(ii) Unterziehen des Methanols einer nicht-katalytischen Reformierung, um so Wasserstoff herzustellen,
wobei das nicht-katalytische Reformieren bei einer Temperatur im Bereich von 700-1300°C durchgeführt wird.

2. Verfahren gemäß Anspruch 1, bei dem der Schritt der Rückgewinnung des Methanols aus der Schwarzlauge Verdampfen umfasst und das rückgewonnene Methanol durch Strippen oder Destillation oder beides gereinigt wird.

3. Verfahren gemäß Anspruch 1 oder Anspruch 2, bei dem das dem nicht-katalytischen Reformieren unterzogene Methanol einen Schwefelgehalt im Bereich von 1-2000 wppm, berechnet als elementarer Schwefel, aufweist.

4. Verfahren gemäß Anspruch 3, bei dem das dem nicht-katalytischen Reformieren unterzogene Methanol einen Schwefelgehalt im Bereich von 50-2000 wppm, berechnet als elementarer Schwefel, aufweist.

5. Verfahren gemäß mindestens einem der vorhergehenden Ansprüche, bei dem das nicht-katalytische Reformieren bei einer Temperatur im Bereich von 800-1100°C durchgeführt wird.

6. Verfahren gemäß Anspruch 5, bei dem das nicht-katalytische Reformieren bei einer Temperatur im Bereich von 850-1100°C durchgeführt wird.

7. Verfahren gemäß mindestens einem der vorhergehenden Ansprüche, bei dem das nicht-katalytische Reformieren unter Verwendung von Dampf durchgeführt wird und das Molverhältnis von Dampf zu Methanol größer als 1 ist.

8. Verfahren gemäß Anspruch 7, bei dem das Molverhältnis von Dampf zu Methanol im Bereich von 1,5-5 liegt.

9. Verfahren nach mindestens einem der vorhergehenden Ansprüche, bei dem das nicht-katalytische Reformieren unter Verwendung von molekularem Sauerstoff durchgeführt wird und das molare Verhältnis von Sauerstoff zu Methanol im Bereich von 0,25 bis 0,75 liegt.

## Revendications

1. Procédé de production d'hydrogène, comprenant les étapes suivantes :
(i) récupération de méthanol à partir de liqueur noire, et
(ii) soumission du méthanol à un reformage non catalytique pour produire de l'hydrogène, dans lequel le reformage non catalytique est mis en oeuvre à une température dans la plage de 700 à 1 300 °C.

2. Procédé selon la revendication 1, dans lequel l'étape de récupération de méthanol à partir de liqueur noire comprend une évaporation, et le méthanol récupéré est purifié par une ou les deux parmi la revaporisation et la distillation.

3. Procédé selon la revendication 1 ou la revendication 2, dans lequel le méthanol soumis à un reformage non catalytique présente une teneur en soufre dans la plage de 1 à 2 000 ppm en poids, calculée en tant que soufre élémentaire.

4. Procédé selon la revendication 3, dans lequel le méthanol soumis à un reformage non catalytique présente une teneur en soufre dans la plage de 50 à 2 000 ppm en poids, calculée en tant que soufre élémentaire.

5. Procédé selon une quelconque revendication précédente, dans lequel le reformage non catalytique est mis en oeuvre à une température dans la plage de 800 à 1 100 °C.

6. Procédé selon la revendication 5, dans lequel le reformage non catalytique est mis en oeuvre à une température dans la plage de 850 à 1 100 °C.

7. Procédé selon une quelconque revendication précédente, dans lequel le reformage non catalytique est
mis en oeuvre en utilisant de la vapeur, et le rapport molaire de la vapeur au méthanol est supérieur à 1.

8. Procédé selon la revendication 7, dans lequel le rapport molaire de la vapeur au méthanol est dans la plage de 1,5 à 5.

9. Procédé selon une quelconque revendication précédente, dans lequel le reformage non catalytique est mis en oeuvre en utilisant de l'oxygène moléculaire, et le rapport molaire de l'oxygène au méthanol est dans la plage de 0,25 à 0,75.
